Europäisches Patentamt

European Patent Office

Office européen des brevets

(19)

(11) Veröffentlichungsnummer : **0 068 343**
**B1**

# EUROPÄISCHE PATENTSCHRIFT

(12)

(45) Veröffentlichungstag der Patentschrift :
01.10.86

(21) Anmeldenummer : 82105338.6

(22) Anmeldetag : 18.06.82

(51) Int. Cl.⁴ : **G 01 N 30/60, B 01 D 15/08**

(54) Säule für Flüssigchromatographie.

(30) Priorität : 19.06.81 CS 4635/81
23.07.81 CS 5650/81

(43) Veröffentlichungstag der Anmeldung :
05.01.83 Patentblatt 83/01

(45) Bekanntmachung des Hinweises auf die Patenterteilung : 01.10.86 Patentblatt 86/40

(84) Benannte Vertragsstaaten :
AT BE CH DE FR GB IT LI NL SE

(56) Entgegenhaltungen :
DE-U- 7 019 684
DE-U- 7 129 511
US-A- 3 440 864
US-A- 3 855 130
US-A- 3 878 099
ULLMANNS ENCYKLOPÄDIE DER TECHNISCHEN
CHEMIE, Band 12, 4. Auflage, Kapitel "Glas und
Glaskeramik" 1976, VERLAG CHEMIE, Weinheim,
Seiten 350, 351
Die Akte enthält technische Angaben, die nach dem
Eingang der Anmeldung eingereicht wurden und die
nicht in dieser Patentschrift enthalten sind.

(73) Patentinhaber : Ceskoslovenska akademie ved
Narodni 3
Praha 1 (CS)

(72) Erfinder : Spacek, Pavel, Dipl.-Ing.
M. Pujmanové 879
Praha 4 (CS)
Erfinder : Vozka, Stanislav
Brázdimská 214/20
Praha 9 (CS)
Erfinder : Coupek, Jiri, Dipl.-Ing.
Sidl. Pankrác II,1580
Praha 4 (CS)
Erfinder : Kubin, Miroslav, Dipl.-Ing.
Hostálkova 68
Praha 6 (CS)
Erfinder : Voslár, Jaroslav
Madridská 2
Praha 10 (CS)
Erfinder : Porsch, Bedrich, Dipl.-Ing.
Slavikova 14
Praha 3 (CS)

(74) Vertreter : Patentanwälte Beetz sen. - Beetz jun.
Timpe - Siegfried - Schmitt-Fumian
Steinsdorfstrasse 10
D-8000 München 22 (DE)

EP 0 068 343 B1

**Beschreibung**

Die Erfindung betrifft eine Säule für die Flüssigchromatographie.

In der Flüssigchromatographie werden zur Erzielung einer hohen Trennleistung metallische, mit feinkörnigen Sorbentien gefüllte Säulen (Röhren) verwendet. Das Lösungsmittel fließt beim Chromatographieren durch die Säule, gewöhnlich unter einem beträchtlichen Druck. Die Säulen bestehen zumeist aus rostfreiem Stahl, der gute mechanische Eigenschaften der Säule, genügende Druckbeständigkeit und in den meisten Fällen auch zufriedenstellende Korrosionsbeständigkeit gegenüber der als mobile Phase verwendeten Flüssigkeit oder auch der analysierten Flüssigkeit gewährleistet. Die Säulen werden durch metallische oder aus Kunststoffen hergestellte Bauteile abgedichtet. Die Konstruktion der Verschlüsse muß gewährleisten, daß die Toträume beim Ein- und Austritt der Säule minimal sind, und bei der eigentlichen Chromatographie durch den Flüssigkeitsdurchfluß keine unerwünschte Verwaschung der Probe stattfindet.

Hierzu existiert eine Reihe von konstruktiven Lösungen, die die oben erwähnten Forderungen zwar erfüllen, aber bei der eigentlichen Flüssigchromatographie auch einige negative Wirkungen aufweisen, die sich aus den bis jetzt angewandten Konzeptionen und den verwendeten Materialien ergeben.

In erster Linie ist die Anwendung von Metallsäulen durch die Korrosionsbeständigkeit des Materials (rostfreien Stahls) begrenzt. Die Korrosionsbeständigkeit ist in den meisten organischen Lösungsmitteln gut, nicht jedoch bei langdauernder Einwirkung von organischen Säuren und Halogenkohlenwasserstoffen bzw. deren Zersetzungsprodukten. Metallsäulen sind ferner wesentlich weniger beständig gegenüber der Einwirkung von wässerigen Säure- und Salzlösungen, die bei der Chromatographie mit umgekehrten Phasen, bei der Ionenaustauschchromatographie, der Affinitätschromatographie sowie der Gelchromatographie von Biopolymeren üblich sind. Bei Gemischen von empfindlichen biologisch aktiven Verbindungen, die immer häufiger durch Flüssigchromatographie getrennt werden, können zudem beim Kontakt mit dem Metall irreversible Veränderungen der Probe stattfinden.

Nicht weniger wichtig sind die Probleme der genauen mechanischen Bearbeitung der Metalle, da die meisten üblichen Konstruktionen verhältnismäßig kompliziert sind. Eine glatte, qualitativ hochwertige innere Oberfläche der Säule ist eine unabdingbare Voraussetzung für eine erfolgreiche Füllung und Anwendung von Säulen. Dies äußert sich wiederum in den verhältnismäßig hohen Herstellungskosten der Metallsäulen. In den meisten Fällen ist die übliche Konstruktion nur für einen bestimmten Verwendungszweck anwendbar und besitzt nur begrenzte Lebensdauer. Bei einer Änderung des Chromatographiesystems oder Chromatographievorhabens oder bei Verminderung der Trennleistung muß die ganze Säule ausgewechselt werden (z. B. US-A-3 855 130).

Ein analoges Konstruktionsprinzip wie bei Metallsäulen wurde auch bei der Herstellung von Glassäulen benutzt (vgl. z. B. den ČS-Urheberschein 183 468). Gläserne Säulen besitzen in der Flüssigchromatographie zahlreiche Vorteile. Der wichtigste Vorteil ist die hohe chemische Beständigkeit gegenüber der Einwirkung von wirksamen mobilen Phasen oder getrennten Verbindungen. Ebenso wichtig ist die hohe Qualität der inneren Oberfläche der Säulen, die das Verwaschen der Zonen auf ein Minimum verringert, das durch Unebenheiten der inneren Oberfläche verursacht wird. Auf der anderen Seite wird jedoch die Anwendung von gläsernen Säulen bekannter Konstruktion bei der hochwirksamen Flüssigchromatographie durch die beträchtliche Sprödigkeit, die geringe Druckfestigkeit sowie durch die Notwendigkeit der Formgebung von Glassäulen zum Fassen der Verschlußstücke kompliziert. Konstruktive Lösungen mit einem Metallmantel zum Ausgleich des inneren Druckes in der Säule durch Einwirkung eines äußeren Drucks sind sehr aufwendig und kostspielig.

Aus der US-A-3 440 864 ist eine Säule für Flüssigchromatographie mit den Merkmalen des Oberbegriffs des Anspruchs 1 bekannt. Diese vorbekannte Säule besitzt jedoch ferner einen im Kopfstück vorgesehenen Kolben, der in die Kapillarbohrung des mit der Sorbenspackung gefüllten Glasrohrs eingedrückt und darin mit mehreren O-Ringen abgedichtet wird und zur Kompensation von Volumänderungen der Sorbenspackung dient. Diese Konstruktion ist entsprechend kompliziert und aufwendig herzustellen und hat den wesentlichen Nachteil, daß bei Austausch des Glasrohrs das Risiko einer Zerstörung des Packungszustands der Sorbenspackung besteht.

Gleiche Probleme liegen auch bei der aus dem Gebrauchsmuster DE-U-7 019 684 bekannten Säule vor, deren Endteile aus einem in die Halterung der Glaskapillare eingeschraubten Kopfstück bestehen, in dem eine Säulenendverschraubung bzw ein Einspritzblock eingeschraubt sind, in denen das Glasrohr jeweils mit Dichtungsringen eingedichtet ist.

Der Erfindung liegt die Aufgabe zugrunde, eine neuartige Säule für die Flüssigchromatographie anzugeben, bei der die oben erwähnten Nachteile herkömmlicher Säulen nicht auftreten.

Die Aufgabe wird gemäß Anspruch 1 gelöst :

Die erfindungsgemäße Säule für Flüssigchromatographie weist

— ein Glasrohr für die Sorbenspackung mit einer flüssigkeitsdurchlässigen Trennwand und Verschlüssen an beiden Enden,

— eine um das Glasrohr herum vorgesehene Halterung und

— an beiden Enden des Glasrohrs vorgesehene mit der Halterung verbundene, zerlegbare Endteile mit jeweils einem Kopfstück und einem Stirnteil mit einer Öffnung zur Ein- und Ableitung der Flüssigkeit, das gegenüber dem Glasrohr abgedichtet ist, auf und ist dadurch gekennzeichnet, daß an den Enden des Glasrohrs zwischen der inneren Wand der Halterung und der äußeren Wand des Glasrohrs jeweils eine über die Stirnseite des Glasrohrs übergreifende Hülse vorgesehen ist, die stirnseitig eine Öffnung aufweist, in der eine am Stirnteil anliegende Dichtung angeordnet ist.

Vorteilhafte Weiterbildungen sind Gegenstand der abhängigen Ansprüche.

Die Hülse kann mit dem Glasrohr verkittet werden, wobei in die Öffnungen der Hülse eine Abdichtung eingeschoben werden kann, in deren Aussparung eine permeable Trennwand angebracht ist. Die Verbindung zwischen der metallischen Hülse und dem Glasrohr kann vorzugsweise auch mit einer niedrigschmelzenden Legierung mit einem Schmelzpunkt zwischen 60 und 250 °C durchgeführt werden, die aus unter Wismut, Blei, Zinn, Cadmium, Zink und Antimon ausgewählten Komponenten zusammengesetzt ist.

Bei einer anderen Ausführung der erfindungsgemäßen Säule besteht die Hülse aus einem Metall und weist auf der inneren Seite Umfangsnuten auf, wobei die Hülse mit einer Einlage aus einem Kunststoff versehen wird, die auf ihrer äußeren Seite Vorsprünge oder Rippen besitzt, die in die Nuten der Hülse eingreifen. Die Einlage hat einen Boden, mit dem sie auf der Stirnfläche des Glasrohrs aufsitzt ; im Boden ist eine permeable Trennwand eingelegt.

Da die Halterung mit der mobilen Phase nicht in Berührung kommt, kann sie auch aus Metallen mit geringerer Korrosionsbeständigkeit wie etwa Aluminium oder Messing hergestellt werden oder sogar aus Kunststoffen wie z. B. Polyamiden, Polypropylen, Polyvinylchlorid, Polyestern oder Phenol-Formaldehyd- oder Harnstoff-Formaldehydharzen bestehen. Auch die Kopfstücke können aus diesen Materialien hergestellt und mit einer korrosionsbeständigen Einlage z. B. aus rostfreiem Stahl oder Glas versehen werden. Die Halterung kann ferner perforiert sein, um eine visuelle Kontrolle des chromatographischen Prozesses und des Zustands der Säulenpackung zu ermöglichen.

Die erfindungsgemäßen Säulen lassen sich ohne Verwendung von Verbindungskapillaren, die das Verwaschen von Zonen verursachen, einfach in Serie verbinden. Die Abdichtung wird durch den Druck erreicht, den die Kopfstücke bzw. Stirnteile auf die entsprechenden Dichtungen des Glasrohrs ausüben.

Die erfindungsgemäßen Säulen vermeiden die oben erwähnten Nachteile der bisherigen Glassäulen. Das verhältnismäßig spröde Glasrohr ist bei der Anwendung in einem festen Schutzmantel untergebracht, wobei die geringe Druckfestigkeit des Glases durch chemische Verfestigung erhöht werden kann. Es ist ferner nicht erforderlich, die Ränder des Glasrohrs zu erweitern, da bei der Anwendung der Säule die entstehenden Axialdrücke durch die Kopfstücke auf die feste Halterung übertragen werden, so daß die Dichtungen bzw. Trennwände am Glasrohr nicht überbeansprucht werden.

Das Glasrohr kann vorteilhafterweise, z. B. nach dem Verfahren gemäß dem CS-Urheberschein A.O. 183 468, durch Eindiffundieren von Kaliumionen in die Glasoberfläche bei erhöhter Temperatur verfestigt werden. Diese Behandlung erhöht die Beständigkeit des Glasrohrs gegen den Druck beim Einfüllen des Sorbens sowie bei der Hochdruckflüssigchromatographie selbst.

Neben der hohen chemischen Beständigkeit und der vollkommenen inneren Oberfläche des Glases liegt ein weiterer Vorteil in der Möglichkeit der visuellen Beobachtung der Trennung und gegebenenfalls auch der Qualität der Packung durch eine oder mehrere Schauöffnungen in der Halterung. In eine einzige Halterung können in einfacher Weise ohne Werkzeuge mit verschiedenen Sorbentien gepackte Glasrohre abwechselnd eingesetzt werden, wie dies bei einigen chromatographischen Analysen erforderlich ist. Die Möglichkeit des Auswechselns der Glasrohre bringt ferner eine wesentliche Verbilligung bei Säulensätzen mit verschiedenen Sorbenspackungen mit sich.

Beim Ersatz einer Säule durch eine neue genügt es, nur ein neues inneres Glasrohr einzusetzen, das mit dem entsprechenden Sorbens gepackt ist. Die Verbindbarkeit von Säulen in Serie ermöglicht den Aufbau variabler Sätze nach dem Baukastenprinzip, wobei kurze schützende Vorsäulen eingeschaltet werden können.

Die Säulen gemäß der Erfindung stellen nicht nur für den Benutzer, sondern auch für den Hersteller eine wirtschaftlich vorteilhaftere Problemlösung dar. Durch Wegfall einer Reihe von Bearbeitungsoperationen bei der Herstellung der Säulen wird der Arbeitsaufwand verringert, wobei auch der Aufwand an metallischen Materialien kleiner ist. Die Konstruktion der erfindungsgemäßen Säulen erlaubt es ferner, den Anteil der Mechanisierung und Automatisation bei der Herstellung der Säulen und bei ihrer Füllung mit Sorbentien wesentlich zu erhöhen.

Einige Ausführungsformen der erfindungsgemäßen Säule sowie ihrer wichtigsten Bestandteile sind in der Zeichnung schematisch im Querschnitt veranschaulicht ; es zeigen :

Figur 1 Eine komplette erfindungsgemäße Säule ;

Figur 2 eine alternative Ausführung der Hülse ;

Figur 3 eine weitere alternative Ausführung der Hülse und

Figur 4 ein Verbindungsstück zur Verbindung von Säulen in Serie.

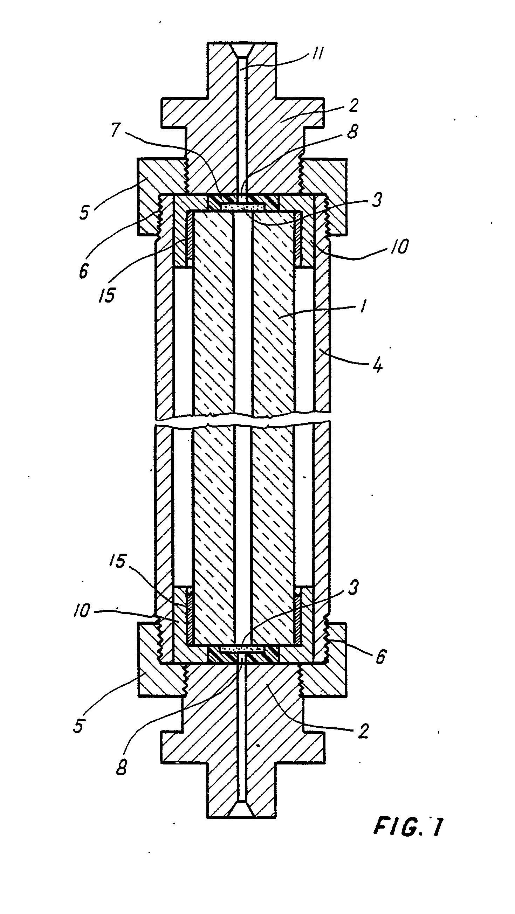

Die in Fig. 1 dargestellte Säule besteht aus einem mit einem Sorbens gepackten Glasrohr 1, das in die Halterung 4 eingelegt ist, deren äußere Enden Gewinde 6 aufweisen. Das Glasrohr 1 ist an beiden Enden mit Verschlüssen versehen. Sie bestehen aus einer permeablen Trennwand 3 und einer Dichtung 7, die sich oberhalb der Trennwand 3 befindet und mit einer Öffnung 8 versehen ist. Die Dichtung 7 ist in die Hülse 10 eingelegt. Die Hülse 10 ist mit einer Kitteinlage 15 mit dem äußeren Ende des Glasrohrs 1 verkittet, welche die Lage des Glasrohrs 1 gegenüber der Halterung 4 in Querrichtung festlegt. In Längsrichtung ist das Glasrohr mit den Kopfstücken 5 in der Halterung 4 befestigt. In das Kopfstück 5 ist das Stirnteil 2 eingeschraubt, das auf der Dichtung 7 zur Anlage kommt. Im Stirnteil 2 ist ein kleiner Kanal 11 zur Aufnahme von Verbindungskapillaren vorgesehen. Der Kanal 11 ist koaxial mit der Öffnung 8 in der Dichtung 7 angeordnet. Die Kopfstücke 5 besitzen auf ihren Innenseiten Gewinde 16 zur Verbindung mit der Halterung 4. Die Halterung 4 kann aus Messing, rostfreiem Stahl oder aus einem Kunststoff wie z. B. Polyvinylchlorid, Polypropylen, Polyester oder Polyamid bestehen. In der Wand der Halterung können Öffnungen zur visuellen Beobachtung des chromatographischen Vorgangs vorgesehen sein. Die Dichtung 7 besteht aus einem Kunststoff, vorzugsweise aus Polytetrafluorethylen. Die permeable Trennwand 3 ist ein poröses Plättchen aus rostfreiem Stahl, Polytetrafluorethylen oder Glas oder ein Metallnetz. Die Hülsen 10 besitzen einen solchen Außendurchmesser, daß sie in der Halterung 4 gleiten können. Nach dem Einschrauben der Kopfstücke 5 in die Halterung 4 sitzt das Stirnteil 2 auf der Dichtung 7 auf ; damit ist die Säule gebrauchsfertig. Die Kitteinlage 15 kann auch so ausgeführt werden, daß der ringförmige Spalt zwischen der äußeren Oberfläche des Glasrohrs 1 und der inneren Oberfläche der Hülse 10 mit einer geschmolzenen, niedrigschmelzenden, 0,5 bis 150 °C über den Schmelzpunkt erhitzten Legierung ausgefüllt wird. Vorzugsweise können z. B. Legierungen von Wismut, Blei, Zinn, Cadmium, Zink und Antimon mit Schmelzpunkten zwischen 60 und 250 °C verwendet werden. Die Metallegierung kontrahiert beim Erstarren um das metallische Endstück beim Erkalten und haftet so sehr fest auf dem Glasrohr. Die gegebenenfalls entstandene radiale Vorspannung des Glases wirkt dabei sehr günstig gegen die in umgekehrtem Sinn wirkenden radialen Drücke bei der eigentlichen Chromatographie, wodurch das am meisten beanspruchte Säulenende verfestigt wird. Beim Aufsetzen der Hülse 10 auf das Glasrohr 1 kann vorteilhafterweise ein Zentrierdorn aus Polytetrafluorethylen o. dgl. verwendet werden, der vor dem Erstarren der Legierung die richtige Geometrie des Säulenendes gewährleistet und die Lage des Glasrohrs 1 und der Hülse 10 fixiert, wodurch der Zusammenbau erheblich vereinfacht wird.

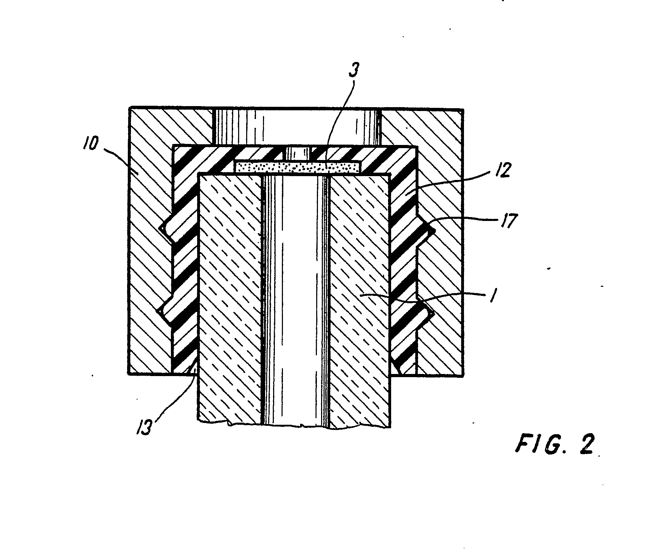

Das Glasrohr 1 kann auch in eine zylindrische, aus Metall hergestellte Hülse nach Fig. 2 eingesetzt werden, die an der Innenwand Nuten 17 besitzt. Die Hülse 10 ist mit einer Einlage 12 aus einem Kunststoff ausgefüllt, z. B. aus Polytetrafluorethylen, die mit einem Anschnittkegel 13 versehen ist. Der Innendurchmesser des zylindrischen Teils der Einlage 12 ist kleiner als der Außendurchmesser des Glasrohrs 1, wobei in der Einlage 12 die Trennwand 3 vorgesehen ist. Nach dem Einpressen des Glasrohrs 1 in die Hülse 10 füllt der Kunststoff die Aussparungen in der Hülse 10, und das Rohr wird durch den gebildeten Druck fixiert.

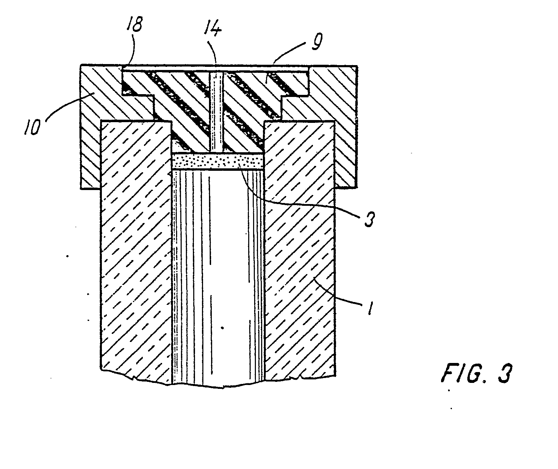

Eine andere Ausführungsform des Verschlusses des Glasrohrs 1 ist in Fig. 3 dargestellt. Er besteht aus einem Stopfen 9 aus Kunststoff mit einer durchgehenden Öffnung 14, der die poröse Trennwand 3 fixiert und mit seinem erweiterten Ende in einen Absatz 18 der Hülse 10 eingreift. Auch in den beiden letztgenannten Fällen erfolgen das Aufschieben des Glasrohrs 1 mit Dichtung und Hülse in die Halterung und die Abdichtung wie bei den auf das Glasrohr aufgekitteten Hülsen.

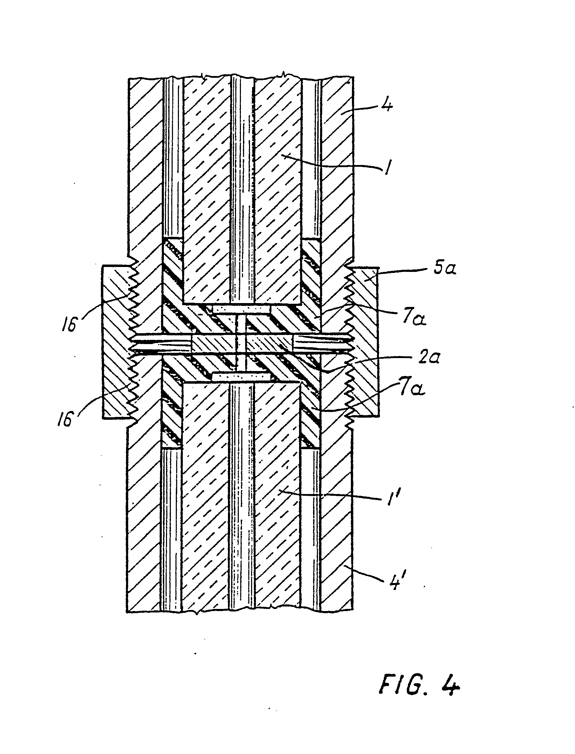

Einzelne mit Halterungen 4 versehene Säulen können über ein Verbindungsstück miteinander in Serie zu einer Verbundsäule verbunden werden, wie in Fig. 4 dargestellt ist. Es weist ein Kopfteil 5a, ein als Scheibe mit einer Öffnung zum Durchfluß der mobilen Phase ausgebildetes Stirnstück 2a und zwei Dichthülsen 7a auf, zwischen denen das Stirnstück angeordnet ist und mit beiden Seiten auf den Dichthülsen 7a der jeweils miteinander verbundenen Säulen anliegt. Das Kopfteil 5a ist doppelseitig ausgebildet und beiderseitig mit Gewinden 16 zum Aufschrauben auf die Halterungen 4, 4' der betreffenden miteinander verbundenen Glasrohre 1, 1' versehen.

Zur näheren Erläuterung wird im folgenden eine konkrete Ausführungsform der erfindungsgemäßen Chromatographiesäule entsprechend Fig. 1 beschrieben.

Wenn das Glasrohr 1 der Einwirkung eines Temperiermediums ausgesetzt werden soll, kann die Halterung 4 gegenüber dem Glasrohr 1 abgedichtet und mit Öffnungen für die Ein- und Ableitung des Temperiermediums versehen werden. Die Abdichtung kann z. B. mit O-Ringen erfolgen, die in in den Hülsen 10 vorgesehenen Nuten liegen. Die Halterung 4 kann auch mehrere verglaste oder freie Schaulöcher zur visuellen Beobachtung der Säulenpackung aufweisen.

Das Glasrohr 1 bestand aus einem Borosilicatglas (SIAL), war durch oberflächliches Eindiffundieren von Kaliumionen verfestigt und besaß einen Innendurchmesser von 3 mm und eine Wandstärke von 2,5 mm. Das Glasrohr war 100 mm lang. Die Hülsen 10 nach Fig. 1 wurden auf das Rohr aufgekittet ; die porösen Trennwände 3 waren Netze aus rostfreiem Stahl mit einer Maschenweite von 3 μm, die mit einer Dichtung 7 aus Polytetrafluorethylen fixiert waren. Die äußere Halterung 4 bestand aus einem Messingrohr mit einem Innendurchmesser von 12 mm und einer Wandstärke von 2,5 mm. Längs der Halterung waren einander gegenüberliegende Schauöffnungen ausgefräst. Die Halterungen 4 waren mit Gewinden 16 versehen, auf denen die Kopfstücke 5 aus Messing mit Stirnteilen 2 aus rostfreiem Stahl aufgeschraubt waren, wobei die Kopfstücke eine Öffnung und ein Außengewinde zum Anschluß von Verbindungskapillaren aufwiesen. Die Säule war mit sphärischen Silikagel-Mikropartikeln einer Korngröße von 5 µm unter einem Druck von 40 MPa gepackt und erreichte eine theoretische Bodenzahl von 25 000 pro Meter Säulenlänge. Bei den Druckproben an der leeren Säule wurde festgestellt, daß sie ohne Zerstörung Drucke von 80 MPa aushielt.

Die Befestigung der Hülse 10 am Glasrohr 1 wurde folgendermaßen durchgeführt : Auf einen stufenweise auf 3,5 mm und 6,5 mm Durchmesser abgedrehten Dorn aus Polytetrafluorethylen wurde zunächst eine Hülse aus rostfreiem Stahl mit einem Außendurchmesser von 10 mm, einem Innendurchmesser von 9 mm und einer Länge von 8 mm aufgeschoben. In die Hülse, die mit einem inneren Absatz 18 (Durchmesser 6,5 mm, Höhe 2 mm) versehen war, wurden etwa 0,7 g einer Legierung von 48 % Wismut, 25 % Blei, 14,5 % Zinn und 12,5 % Cadmium (Fp. 60,5 °C) eingebracht. Das Ganze wurde in einem Heißluftstrom zusammen mit dem Ende des Glasrohrs 1 mit einem Innendurchmesser von 3,5 mm und einem Außendurchmesser von 8,3 mm erwärmt, worauf das Glasrohr 1 sofort in die Hülse 10 aus rostfreiem Stahl eingeschoben und mit dem Dorn zentriert wurde. Überschüssige ausgepreßte Legierung wurde in noch geschmolzenem Zustand entfernt und nach dem Erstarren mit einem Messer fein abgeschnitten, worauf der Zentrierdorn herausgezogen wurde. Die Hülse 10 aus rostfreiem Stahl ließ sich selbst mit Zangen nicht entfernen.

Die Zusammensetzung der verwendeten Legierung hängt vom gewünschten Schmelzpunkt ab und kann nach Literaturangaben ausgewählt werden (z. B. nach Perelmann V.J., « Malá chemická přiručka » (Kleines Handbuch der Chemie), 1954, S. 473).

Dem Bereich von Schmelzpunkten zwischen 60 und 250 °C entsprechen verschiedene Zusammensetzungen der Legierungen, wobei die Anteile der einzelnen Komponenten in folgenden Bereichen liegen :

|  | (%) |
|---|---|
| Wismut | 0 bis 70 |
| Blei | 0 bis 90 |
| Zinn | 0 bis 100 |
| Cadmium | 0 bis 50 |
| Zink | 0 bis 15 |
| Antimon | 0 bis 15. |

## Patentansprüche

1. Säule für Flüssigchromatographie mit einem Glasrohr (1) für die Sorbenspackung mit einer flüssigkeitsdurchlässigen Trennwand (3) und Verschlüssen an beiden Enden, einer um das Glasrohr (1) herum vorgesehenen Halterung (4) und an beiden Enden des Glasrohrs (1) vorgesehenen, mit der Halterung (4) verbundenen, zerlegbaren Endteilen mit jeweils einem Kopfstück (5) und einem Stirnteil (2) mit einer Öffnung (11) zur Ein- und Ableitung der Flüssigkeit, das gegenüber dem Glasrohr (1) abgedichtet ist, dadurch gekennzeichnet, daß an den Enden des Glasrohrs (1) zwischen der inneren Wand der Halterung (4) und der äußeren Wand des Glasrohrs (1) jeweils eine über die Stirnseite des Glasrohrs (1) übergreifende Hülse (10) vorgesehen ist, die stirnseitig eine Öffnung aufweist, in der eine am Stirnteil (2) anliegende Dichtung (7) angeordnet ist.

2. Säule nach Anspruch 1, dadurch gekennzeichnet, daß die Hülse (10) mit einer Kitteinlage (15) mit dem Ende des Glasrohrs (1) verbunden ist und die in der Öffnung der Hülse (10) vorgesehene Dichtung (7) eine Aussparung aufweist, in der die Trennwand (3) vorgesehen ist.

3. Säule nach Anspruch 1, dadurch gekennzeichnet, daß die Hülse (10) aus Metall besteht und auf ihrer inneren Seite mit Umfangsnuten (17) und einer Einlage (12) aus einem Kunststoff versehen ist, die einen auf der Stirnseite des Glasrohrs (1) aufliegenden Boden aufweist, in den die Trennwand (3) eingelegt ist.

4. Säule nach Anspruch 1, dadurch gekennzeichnet, daß die Hülse (10) auf der Stirnseite des Glasrohrs (1) aufliegt und in ihrer Öffnung ein Absatz (18) vorgesehen ist, in den ein Stopfen (9) eingepaßt ist, in den die Trennwand (3) eingelegt ist.

5. Säule nach einem der Ansprüche 1, 2 und 4, dadurch gekennzeichnet, daß die Hülse (10) mit einer Kitteinlage (15) aus einer niedrigschmelzenden Legierung mit einem Schmelzpunkt zwischen 60 und 250 °C, die aus unter Wismut, Blei, Zinn, Cadmium, Zink und Antimon ausgewählten Bestandteilen zusammengesetzt ist, mit dem Glasrohr (1) verbunden ist.

6. Säule nach einem der Ansprüche 1 bis 5, dadurch gekennzeichnet, daß das Glasrohr (1) durch Eindiffundieren von Kaliumionen in die Glasoberfläche verfestigt ist.

7. Säule nach einem der Ansprüche 1 bis 6, dadurch gekennzeichnet, daß die Halterung (4) aus rostfreiem Stahl, Aluminium, einer Aluminiumlegierung, Messing, Titan, Polyamid, Polypropylen, Polyvinylchlorid, Polyester, Phenol-Formaldehydharz oder Harnstoff-Formaldehydharz besteht.

8. Säule nach einem der Ansprüche 1 bis 7, gekennzeichnet durch ein Verbindungsstück mit einem Kopfteil (5a), einem als Scheibe mit einer Öffnung ausgebildeten Stirnstück (2a) und zwei Dichthülsen (7a), zwischen denen das Stirnstück angeordnet ist, wobei das Kopfteil (5a) doppelseitig ausgebildet und an beiden Enden mit Gewinden (16) zum Verbinden der Halterungen (4, 4') zweier Glasrohre (1, 1') versehen ist.

9. Säule nach einem der Ansprüche 1 bis 8, dadurch gekennzeichnet, daß die Halterung (4) mit Öffnungen zur Ein- und Ableitung eines Temperiermediums versehen ist.

10. Säule nach einem der Ansprüche 1 bis 9, dadurch gekennzeichnet, daß die Halterung (4) mit einem oder mehreren Schaulöchern zur visuellen Beobachtung der Säulenpackung versehen ist.

**Claims**

1. A liquid chromatography column comprising

a glass tube (1) for the sorbent package having a liquid-permeable partition wall (3) and closures at both ends,

a holding means (4) provided around the glass tube (1), and

terminal parts adapted for disassembly and provided at both ends of the glass tube (1) and connected to the holding means (4), said terminal parts having each a head part (5) and a front part (2) with an opening (11) for introducing and discharging the liquid which is sealed against the glass tube (1), characterized in that at the ends of the glass tube (1) between the inner wall of the holding means (4) and the outer wall of the glass tube (1) there is provided a sleeve (10) extending over the front side of the glass tube (1) and having on the front side an opening with a seal (7) bearing against the front part (2).

2. Column according to claim 1, characterized in that the sleeve (10) is connected by way of a cement filling (15) to the end of the glass tube (1), and the seal (7) provided in the opening of the sleeve (10) has a recess accommodating the partition wall (3).

3. Column according to claim 1, characterized in that the sleeve (10) consists of metal and is provided on its inside with peripheral grooves (17) and an insert (12) of plastic with a bottom resting on the front side of the glass tube (1) and accommodating the partition wall (3).

4. Column according to claim 1, characterized in that the sleeve (10) rests on the front side of the glass tube (1), and in the opening thereof there is a step (18) into which a plug (9) is fitted wherein the partition wall (3) is inserted.

5. Column according to one of claims 1, 2 and 4, characterized in that the sleeve (10) is connected to the glass tube (1) with a cement filling (15) consisting of a low-melting alloy having a melting point between 60 and 250 °C and being composed of components selected among bismuth, lead, tin, cadmium, zinc and antimony.

6. Column according to one of claims 1 to 5, characterized in that the glass tube (1) is consolidated by diffusion of potassium ions into the glass surface.

7. Column according to one of claims 1 to 6, characterized in that the holding means (4) consists of stainless steel, aluminium, aluminium alloy, brass, titanium, polyamide, polypropylene, polyvinyl chloride, polyester, phenol/formaldehyde resin or urea/formaldehyde resin.

8. Column according to one of claims 1 to 7, characterized by a coupling member having a head part (5a), a front part (2a) in the form of an apertured disk, and two sealing sleeves (7a) between which the front part is disposed, said head part (5a) being double-ended and provided at both ends with threads (16) for joining the holding means (4, 4') of two glass tubes (1, 1').

9. Column according to one of claims 1 to 8, characterized in that the holding means (4) is provided with openings for introducing and discharging a tempering medium.

10. Column according to one of claims 1 to 9, characterized in that the holding means (4) is provided with one or more inspection holes for visual observation of the column package.

**Revendications**

1. Colonne pour chromatographie en phase liquide avec

un tube de verre (1) pour le garnissage de sorbants, avec une cloison de séparation perméable aux liquides (3) et des obturateurs aux deux extrémités,

un support (4), prévu autour du tube de verre (1), et

des pièces en bout démontables, prévues en les deux extrémités du tube de verre (1), reliées au support (4), possédant chacune une pièce de tête (5) et une partie frontale (2) avec une ouverture (11) pour l'introduction et l'évacuation du liquide, et qui est étanchée par rapport au tube de verre (1), caractérisée en ce qu'il est prévu, en chacune des extrémités du tube de verre (1), entre la paroi intérieure du support (4) et la paroi extérieure du tube de verre (1), une douille (10) recouvrant le côté frontal du tube de verre (1) et présentant du côté frontal une ouverture dans laquelle est disposée une étanchéité (7) au contact de la partie frontale (2).

2. Colonne selon la revendication 1, caractérisée en ce que la douille (10) est liée à l'extrémité du tube de verre (1) à l'aide d'une garniture de mastic (15), et que l'étanchéité (7), prévue dans l'ouverture de la douille (10), présente un évidement dans lequel est prévue la cloison de séparation (3).

3. Colonne selon la revendication 1, caractérisée en ce que la douille (10) est en métal et est pourvue, sur sa face intérieure, de rainures périphériques (17) et d'une garniture (12) en une matière plastique, qui possède un fond, appliqué sur le côté frontal du tube de verre (1) et dans lequel est insérée la cloison de séparation (3).

4. Colonne selon la revendication 1, caractérisée en ce que la douille (10) est appliquée sur le côté frontal du tube de verre (1) et qu'il est prévu dans son ouverture un gradin (18) dans lequel est ajusté un bouchon (9), dans lequel est insérée la cloison de séparation (3).

5. Colonne selon l'une des revendications 1, 2 et 4, caractérisée en ce que la douille (10) est liée au tube de verre (1) par une garniture de mastic (15) constituée d'un alliage à bas point de fusion, ayant un point de fusion compris entre 60 et 250 °C, et qui est composé de constituants choisis entre le bismuth, le plomb, l'étain, le cadmium, le zinc et l'antimoine.

6. Colonne selon l'une des revendications 1 à 5, caractérisée en ce que le tube de verre (1) est stabilisé par diffusion d'ions calcium dans la surface de verre.

7. Colonne selon l'une des revendications 1 à 6, caractérisée en ce que le support (4) est en acier inoxydable, en aluminium, en un alliage d'aluminium, en laiton, en titane, en polyamide, en polypropylène, en poly(chlorure de vinyle), en polyester, en résine de phénol-formaldéhyde ou en résine d'urée-formaldéhyde.

8. Colonne selon l'une des revendications 1 à 7, caractérisée par une pièce de liaison possédant une partie de tête (5a), une pièce frontale (2a) ayant la forme d'un disque avec une ouverture, et deux douilles d'étanchéité (7a) entre lesquelles la pièce frontale est disposée, la pièce de tête (5a) étant réalisée avec deux faces et étant pourvue en ses deux extrémités de filetages (16) pour assembler les supports (4, 4') de deux tubes de verre (1, 1').

9. Colonne selon l'une des revendications 1 à 8, caractérisée en ce que le support (4) est pourvu d'ouvertures pour introduire et évacuer un fluide modérateur.

10. Colonne selon l'une des revendications 1 à 9, caractérisée en ce que le support (4) est pourvu d'un ou plusieurs regards pour permettre une observation visuelle du garnissage de la colonne.

FIG. 1

FIG. 2

FIG. 3

FIG. 4